# EUROPEAN PATENT APPLICATION

(11) **EP 1 385 095 A2**
(43) Date of publication of application: **28.01.2004**
(21) Application number: 03254164.1
(22) Date of filing: 30.06.2003
(51) Int. Cl.: G06F 17/28

(54) **Apparatus, method and computer product for performing translation**

(30) Priority: 26.07.2002 JP 2002217968
(71) Applicant: FUJITSU LIMITED, Kawasaki-shi, Kanagawa 211-8588 (JP)
(72) Inventor: Fuji, Masaru, c/o Fujitsu Limited, Kawasaki-shi, Kanagawa 211-8588 (JP)
(74) Representative: Stebbing, Timothy Charles

(57) **Abstract**

A translation apparatus (10) translates a translation target sentence in a source language into a translation sentence in a target language. Source words in sample sentences in the source language and a translation word that represents translation of the corresponding source word in the target language are stored in correlated form in a pre-analysis database (13). For a given translation target sentence, translation words that correspond to each word in the translation target sentence are extracted as translation candidate words from the stored contents. The translation words extracted are displayed on an output unit (12) along with a specific word in the translation target sentence.

## Description

The present invention relates to an apparatus, method and program for displaying translation candidate words when performing translation using a computer.

In the field of translation, there is a constant requirement for consistency and accuracy when translating an original word into various other languages. In other words, in addition to the translated words forming a meaningful sentence, the translation should also be consistent with the previously obtained translation of the same sentence. In the light of this requirement, development of translation aiding systems that store previously translated source language sentences and their target language (i.e., the language into which the words are to be translated) equivalents as reference material has been gaining ground.

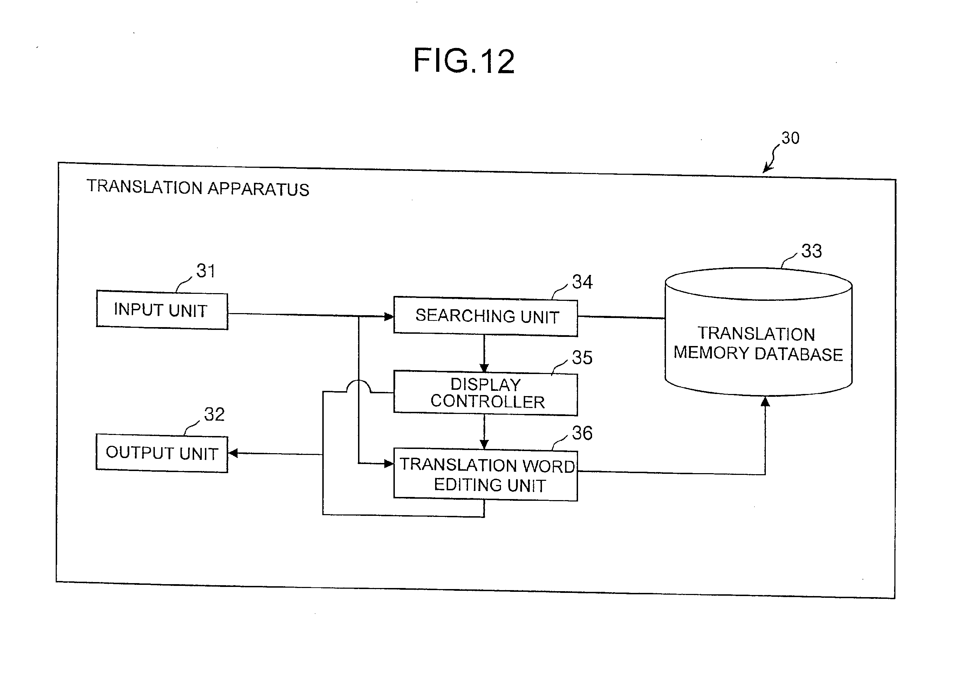

Fig. 12 shows a translation apparatus 30 (the so-called translation memory system) as one such typical translation aiding system. The translation apparatus 30 stores, as samples, the source language sentences and their target language equivalents and displays sample sentences for each word of a translation target sentence (sentence to be translated).

The translation apparatus 30 has a translation memory database 33 in which previously translated source language sentences and their target language equivalents are stored in a correlated form. When a translation target sentence is entered using an input unit 31, a searching unit 34 looks for each of the words present in the translation target sentence in the translation memory database 33. A display controller 35 outputs the source language sentences that include words present in the translation target sentence and their target language equivalents to an output unit (for example, a display) 32.

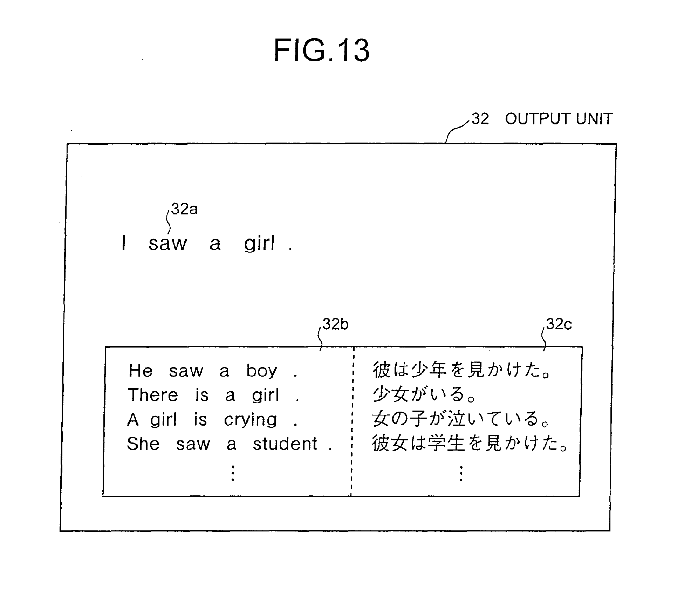

In other words, for instance, if an original sentence 'I saw a girl' is entered, the searching unit 34 looks for sentences in the source language that include the words 'saw' and 'girl' in the translation memory database 33 and, as shown in Fig. 13, displays the hit sentences along with their target language equivalents on the output unit 32. In Fig. 13, reference numeral 32a indicates the original sentence, 32b indicates the hit source language sentences, and 32c indicates target language equivalents of the hit sentences.

The user refers to the source language sentences 32b and their target language equivalents 32c displayed on the output unit 32, decides which one is the most appropriate translation of the original sentence in the translation target language, and points to that most appropriate translation using the input unit 31. A translation word editing unit 36 makes the translation memory database 33 store, in a correlated form, the translation pointed to by the user and its source language sentence. In other words, in the above example, the source language sentence 'I saw a girl' and its translation are stored in a correlated form.

However, in the conventional translation apparatus, as the original sentences and their target language equivalents are merely listed, deciding on the correct translation takes time and causes the user inconvenience since every source language sentence and its corresponding translation has to be studied before taking the decision of the most appropriate translation. Hence, the conventional translation apparatus is not very efficient.

In other words, as an example, if a user has to find out the translation for the word 'girl', the first step is to look for the source language sentences that include the word 'girl'. The next step is to look up their corresponding target language equivalent sentences to find out how the word 'girl' has been translated and decide on the right shade of meaning. All this costs the user a considerable amount of trouble and time, and causes unnecessary processing in the translation apparatus.

It is therefore desirable to solve at least the above problems in the conventional technology.

A translation apparatus according to a first aspect of the present invention translates a translation target sentence in a source language into a translation sentence in a target language. The translation apparatus comprises a translation sample storing unit that stores in a correlated form each source word in sample sentences in the source language and a translation word that represents translation of the corresponding source word in the target language; a translation compiling unit that compiles and extracts, from amongst the translation words stored, the translation words that correspond to each word in the translation target sentence as translation candidate words; and a display controlling unit that displays the translation candidate words extracted by the translation compiling unit along with a specific word in the translation target sentence.

A method according to a second aspect of the present invention is a method of translating a translation target sentence in a source language into a translation sentence in a target language. The method comprises storing in a correlated form each source word in sample sentences in the source language and a translation word that represents a translation of the corresponding source word in the target language; compiling and extracting, from amongst the translation words stored, the translation words that correspond to each word in the translation target sentence as translation candidate words; and displaying the translation candidate words extracted by the translation compiling unit along with a specific word in the translation target sentence.

According to a third aspect of the present invention, there is provided a computer program, which when executed by a computer, causes the computer to perform translation of a translation target sentence in a source language into a translation sentence in a target language.

Embodiments of the invention can reduce processing time required to produce output from a translation apparatus, reduce the demand on hardware resources of a translation apparatus, and reduce the load on a communications network when a translation apparatus is operated remotely.

Reference is now made, by way of example only, to the accompanying drawings, in which:
Fig. 1 is a block diagram of a translation apparatus according to a first embodiment;
Fig. 2 shows the structure of entries stored in a translation sample database;
Fig. 3 is a flowchart that shows the series of operations in a pre-analysis data process;
Fig. 4 is a flowchart that shows the series of operations in a translation candidate word display process;
Fig. 5 is a drawing that explains the search process and search result;
Fig. 6 is a drawing that explains creation of a translation word list;
Fig. 7 is a drawing that explains tabulation of translation words;
Fig. 8A to Fig. 8C are sample screen configurations that are displayed on an output unit;
Fig. 9A to Fig. 9C are sample screen configurations that are displayed on an output unit;
Fig. 10 is a schematic diagram of a computer system according to a second embodiment of the present invention;
Fig. 11 is a block diagram of the main unit of the computer system shown in Fig. 10;
Fig. 12 is a block diagram of a conventional translation apparatus; and
Fig. 13 is a sample screen configuration that is displayed on the output unit in Fig. 12.

Exemplary embodiments of the translation apparatus, translation method, and the computer program according to the present invention are explained with reference to the accompanying drawings. The first embodiment described next pertains to a translation apparatus and translation method according to the present invention. The second embodiment pertains to a computer system that runs a translation candidate word displaying program according to the present invention. The other embodiments pertain to other variations of the present invention. In all examples, the source language is taken as English and the target language as Japanese, but any two written languages could be used.

A first embodiment of a translation apparatus and a translation method according to the present invention is explained next. First a brief outline of the translation apparatus and its features is explained. The structure of the translation apparatus is then explained. Lastly, the processes performed by the translation apparatus are explained.

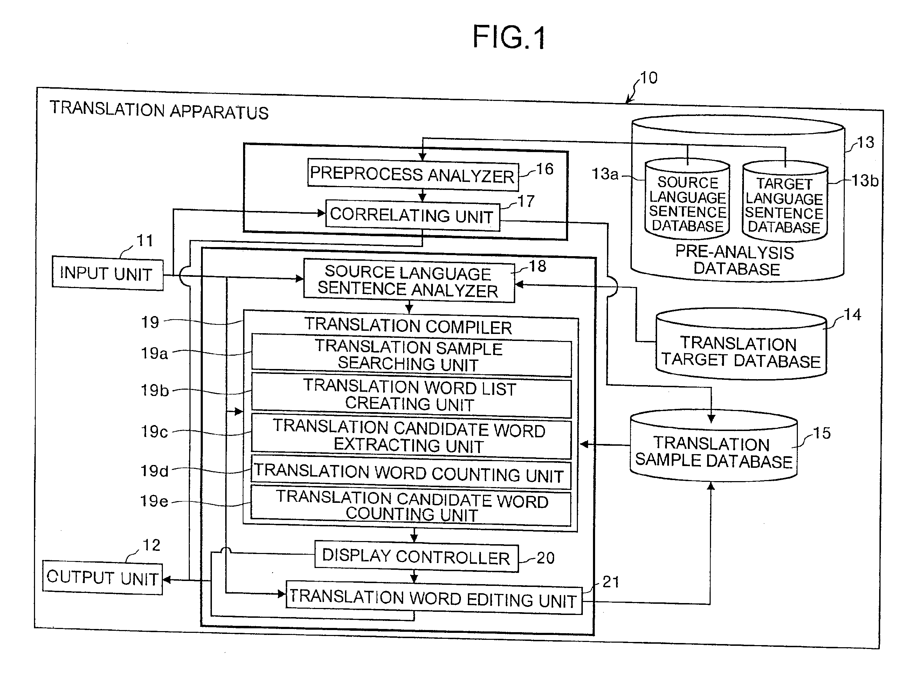

Fig. 1 is a block diagram of a translation apparatus 10 according to the first embodiment. The translation apparatus 10, in summary, stores source language sentences and their target language equivalents as sample sentences and displays specific word(s) of a translation target sentence along with their translation candidate words found from the stored sample sentences.

It is one of the features of the translation apparatus 10 that the source language word and its translation candidate word are displayed side by side, therefore enabling efficient translation, reducing the need for correction.

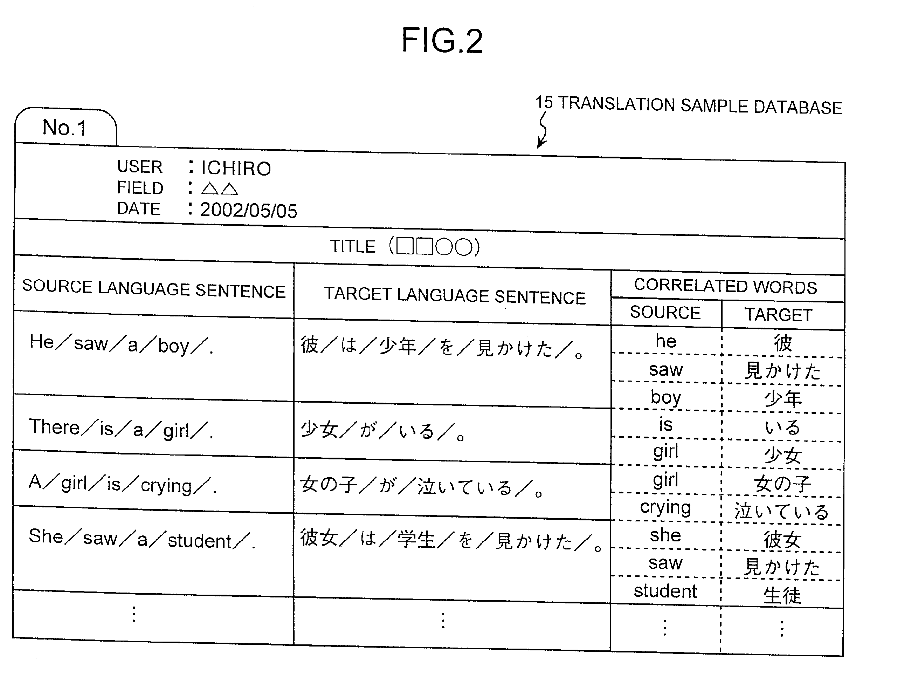

This feature is explained next with examples. In the translation apparatus 10, a translation sample database 15 stores the source language sentences along with their target language equivalents by correlating each word in the source language sentence with its corresponding target language word (see Fig. 2).

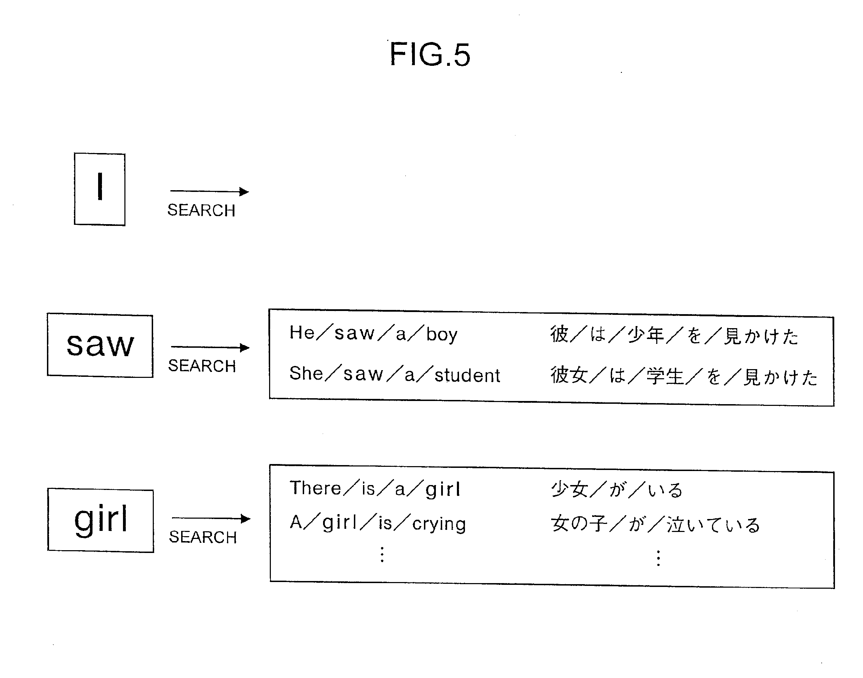

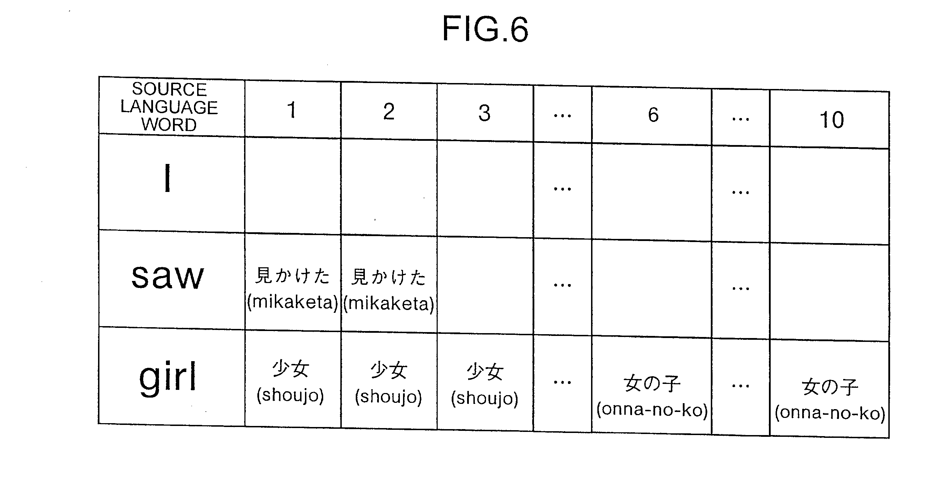

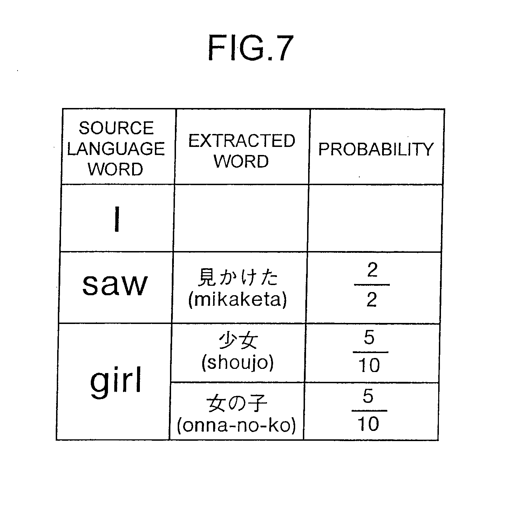

When a translator looks for the translation of a sentence, a translation compiler 19 extracts from the translation sample database 15 all the translation words correlated to the words that appear in the sentence. In other words, the translation compiler refers to the translation of each word stored in a correlated form in the translation sample database 15 and compiles a translation word list for the words in the translation target sentence (see Fig. 5 and Fig. 6). The translation compiler then extracts, from the translation word list, disparate translation words as they are as translation candidate words, and the translation words that appear more than once by collectively extracting them as a single translation candidate word (see Fig. 7).

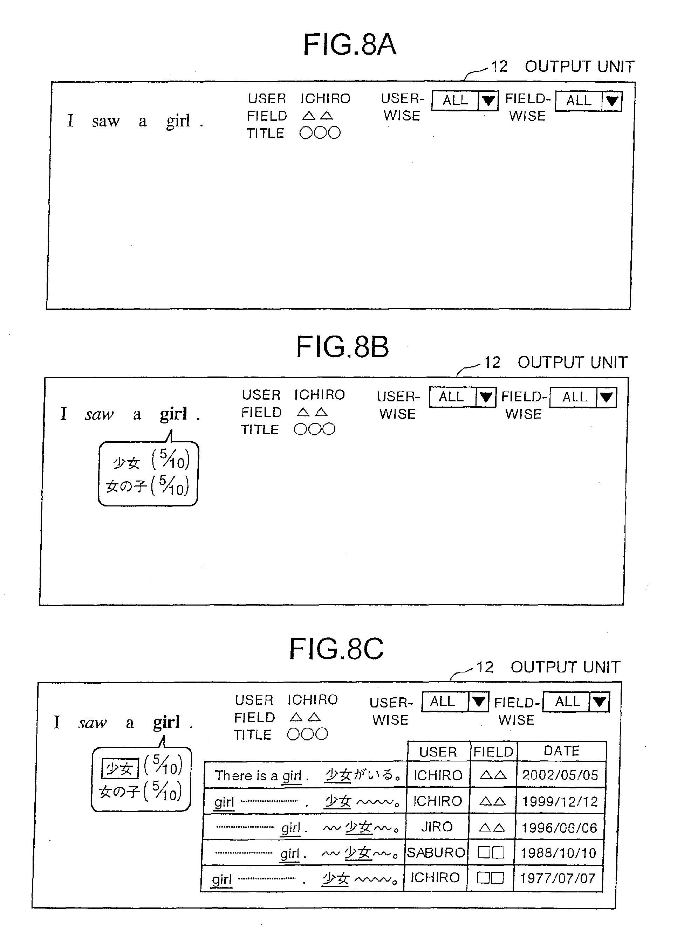

A display controller 20 controls display in such a way that all the translation candidate words compiled and extracted by the translation compiler 19 are displayed on an output unit 12, along with the translation target words. In other words, unlike the conventional translation apparatus shown in Fig. 13, that displays sentences that include words in the translation target sentence along with their target language equivalents, the translation apparatus 10 according to the present embodiment displays on the output unit 12 the translation candidate words compiled and extracted by the translation compiler 19 (refer to Fig. 8B).

Consequently, if a user is looking for the translation of the word 'girl', it is no longer necessary to go through the laborious process of reading each and every sentence having the word 'girl' and its corresponding translation. The user merely refers to the words 'shoujo' and 'onna-no-ko' that are listed against the word 'girl'. This helps cut down processing time to a great extent and aids the user in carrying out the translation work more efficiently.

Prior to the translation candidate word display process described above (and as a process separate from the translation by the user), the translation apparatus 10 according to the first embodiment also executes a pre-analysis data process for creating the translation sample database 15. In other words, the translation apparatus 10 stores each word in the source language sentence by correlating it with its translation candidate word.

The structure of the translation apparatus 10 according to the first embodiment is explained next with reference to Fig. 1. The translation apparatus 10 comprises an input unit 11, the output unit 12, a pre-analysis database 13, a translation target database 14, the translation sample database 15, a preprocess analyzer 16, a correlating unit 17, a source language sentence analyzer 18, the translation compiler 19, the display controller 20, and a translation word editing unit 21.

The input unit 11 can be a keyboard or a mouse using which data can be entered. The input unit 11 is mainly used for selecting a translation target sentence from the translation target database 14, a translation candidate word for the specific word of the translation target sentence (see Fig. 8C), a search range (search conditions like title, field, translator, date, etc explained later) in the translation sample database 15, and the like.

The output unit 12 can be a monitor onto which data, such as the words of a translation target sentence and their target language equivalents, are displayed (see Fig. 8B). When displaying the translation candidate words, the output unit 12 also outputs, based on the translation sample database 15, the target language sentences that include the translation candidate words and their corresponding source language sentences (see Fig. 8C).

The pre-analysis database 13 is a unit in which the previously entered translation target sentences and their target language equivalents are stored as samples. The database required for executing the pre-analysis data process for creating the translation sample database 15 is stored in 13a and 13b - the two parts of the pre-analysis database 13 for storing previously entered source language sentences and the target language translation of the previously entered source language sentences, respectively.

The translation target database 14 is a unit in which the translation target sentences are stored. The user can select a translation target sentence from the translation target database 14 using the input unit 11.

The translation sample database 15 stores each word of the source language sentences in the sample sentences stored in the pre-analysis database 13, by correlating it with its translation candidate word(s) (see Fig. 2). The translation sample database 15 also has words stored in correlation with search conditions (title, field, translator, and date of translation) based on which the translation compiler 19 searches the database (see Fig. 2). Besides, a new source language sentence and its equivalent target language sentence can be added in a correlated form as sample sentences to this translation sample database 15 by the translation word editing unit 21 described later.

The preprocess analyzer 16 analyzes the source language sentences and the target language equivalents stored in the pre-analysis database 13 and breaks them down into words. The correlating unit 17, according to the indication for correlation given by the user via the input unit 11, correlates each of the source language words broken down by the preprocess analyzer 16 with its corresponding translation candidate word. The source language sentences and the target language sentences are thus stored in a correlated form in the translation sample database 15 (see Fig. 2).

The source language sentence analyzer 18 is a unit that analyzes the translation target sentence from the translation target database 14. For instance, it breaks down the source language sentence 'I saw a girl' into words 'I/saw/a/girl'.

The translation compiler 19 compiles and extracts from the translation sample database 15 the translation candidate words of a desired word out of the words present in the source language sentence. The translation compiler 19 is conceptually (according to function) made of a translation sample searching unit 19a, a translation word list creating unit 19b, a translation candidate word extracting unit 19c, a translation word counting unit 19d, and a translation candidate word counting unit 19e.

The translation sample searching unit 19a searches the translation sample database 15 for the source language sample sentences that include words present in the translation target sentence and their corresponding target language sentences. For instance, as shown in Fig. 5, the translation sample searching unit 19a searches for the source language sentences that include the words 'I', 'saw', and 'girl' and also the target language equivalents of these sentences. Further, if any search condition (such as the title, field, translator, and date) is specified using the input unit 11, the translation sample searching unit 19a searches for the source language sample sentences that satisfy the search condition and their corresponding target language equivalents.

The translation word list creating unit 19b creates, based on the search result by the translation sample searching unit 19a, a translation word list corresponding to each word of the translation target sentence. The translation word list creating unit 19b refers to the source language sample sentences that include the words in the translation target sentence and their target language equivalents (see Fig. 5), gets the equivalent for each word of the translation target sentence and presents them in the form of a list. In Fig. 6, for the word 'saw', a list having two entries of 'mikaketa' is shown, and for the word 'girl', a list having five (three are shown) entries of 'shoujo' and five (two are shown) entries of 'onna-no-ko' is shown.

The translation candidate word extracting unit 19c extracts, from the translation word list created by the translation word list creating unit 19b, disparate translation words as they are as translation candidate words, and the translation words that appear more than once by collectively extracting them as a single translation candidate word. For instance, as shown in Fig. 7, the translation extracting unit 19c extracts only one 'mikaketa' from the list of two entries for the word 'saw'. For the word 'girl', the translation candidate word extracting unit 19c extracts one 'shoujo' from the list of five entries and one 'onna-no-ko' from the list of five entries.

The translation word counting unit 19d refers to the translation word list created by the translation word list creating unit 19b and calculates, for each translation candidate word, the number of translation words. For example, for the source language word 'girl' in the translation word list in Fig. 6, the count for the translation candidate word 'shoujo' is five and the translation candidate word 'onna-no-ko' is five. Further, the translation word counting unit 19d presents the number as 'Actual No./Total No.' (in other words, the probability), as shown in Fig. 7.

The translation candidate word counting unit 19e counts the number of translation candidate words for each word of the translation target sentence. For example, for the source language word 'I' in the example shown in Fig. 7, the count is zero, for 'saw', the count is one, and the count is two for 'girl'.

The display controller 20 creates a display screen for the process result of translation compiler 19 to be output on the output unit 12. That is, the display controller 20 controls display in such a way that the words of the translation target sentence along with the translation candidate words compiled and extracted by the translation compiler 19 are output on the output unit 12 (see Fig. 8B). The display controller 20 also controls, based on the result obtained by the translation word counting unit 19d, the display of the frequency of a particular translation candidate word, and, based on the result obtained by the translation candidate word counting unit 19e (that is, based on the number of translation candidate words for a given source language word), controls the display of the source language word by making it distinguishable by changing its display characteristics (for instance, font, color, etc.). Further, the display controller 20 also controls display in such a way that when a specific translation candidate word is selected using the input unit 11, sample sentences (in both source language and target language) that include the selected word are displayed along with the title, field, translator, and date of translation on the output unit 12 (see Fig. 8C).

The translation word editing unit 21 is a unit that edits the translation, that is, edits the target language sentence corresponding to a source language sentence. In other words, the translation word editing unit 21 correlates a source language word output on the output unit 12 with the translation candidate word received via the input unit 11. The new source language sentence and its equivalent target language sentence are added in a correlated form as sample sentences to the translation sample database 15 by the translation word editing unit 21.

The series of operations executed by each of the units in the translation apparatus 10 according to the first embodiment are explained next. A pre-analysis data process (a process that is required to be executed prior to translation candidate word display) and translation candidate word display process, are explained here.

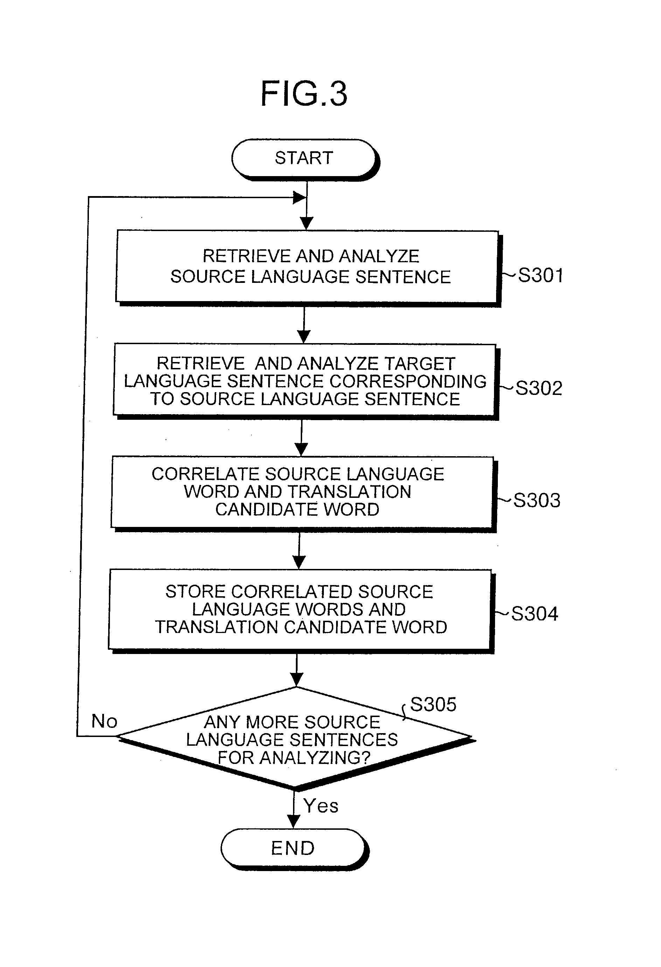

Fig. 3 is a flowchart that shows a series of operations in the pre-analysis data process. The preprocess analyzer 16 retrieves a previously translated source language sentence from the source language database 13a of the pre-analysis database 13 and breaks it up into individual words (Step 5301). In the same way, the preprocess analyzer 16 also retrieves the target language sentence corresponding to the retrieved source language sentence and breaks it up into words (Step S302).

The correlating unit 17 correlates each source language word, obtained as a result of analysis by the preprocess analyzer 16, with a translation candidate word selected by the user via the input unit 11 (Step S303). The pairs of source and target words correlated by the correlating unit 17 are then stored in the translation sample database 15 (Step S304).

The preprocess analyzer 16 then assesses if the processed sentence was the last one (Step S305). If the answer is Yes for Step S305, the process ends there. If the answer is No for Step S305, the preprocess analyzer 16 retrieves the next previously translated source language sentence from the source language database 13a of the pre-analysis database 13 and breaks it up into individual words (Step S301), and the subsequent steps 5302 to S304 are repeated for that translated source language sentence.

As a result of the above described series of operations, each source language sample word and its corresponding translation words are stored in the translation sample database 15 in a correlated form (see Fig. 2).

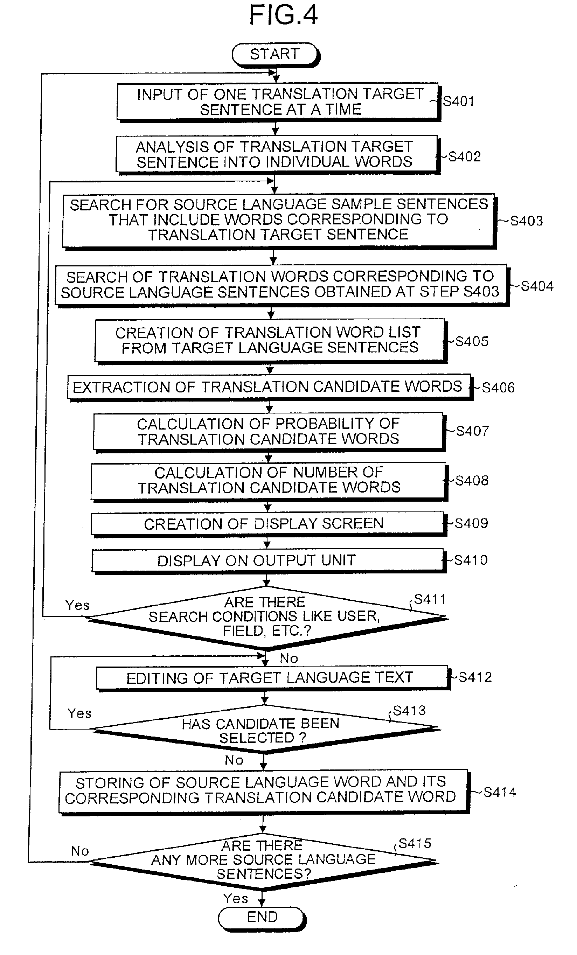

The translation candidate word display process is explained next with reference to the flowchart shown in Fig. 4. The input unit 11 is used to select a translation target sentence from the translation target database 14 (Step S401). In other words, the user selects a sentence such as 'I saw a girl', as shown in Fig. 8A, from the translation target database 14 using the input unit 11.

Next, the source language sentence analyzer 18 analyzes the translation target sentence selected by the user (Step S402). In other words, the source language sentence analyzer 18 breaks down the translation target sentence 'I saw a girl' into individual words 'I/saw/a/girl'.

Then the translation sample searching unit 19a searches the translation sample database 15 for the source language sample sentences that include words present in the translation target sentence (Step S403) and their corresponding target language sentences (Step S404). For instance, the translation sample searching unit 19a searches the translation sample database 15 for the source language sentences that include the words 'I', 'saw', and 'girl' and also the target language equivalents of these sentences.

The translation word list creating unit 19b creates, based on the search result (see Fig. 5) by the translation sample searching unit 19a, a translation word list corresponding to the words in the translation target sentence (Step S405). In the example shown in Fig. 6, the word 'saw' has two entries of 'mikaketa' corresponding to it, and the word 'girl' has five entries of 'shoujo' and five entries of 'onna-no-ko' corresponding to it.

Next the translation candidate word extracting unit 19c extracts, from the translation word list created by the translation word list creating unit 19b, disparate translation words as they are as translation candidate words, and the translation words that appear more than once by collectively extracting them as a single translation candidate word (Step S406). For instance, as shown in Fig. 7, the translation extracting unit 19c extracts only one 'mikaketa' from the list of two for the word 'saw'. For the word 'girl', the translation candidate word extracting unit 19c extracts one 'shoujo' from the list of five entries and one 'onna-no-ko' from the list of five entries.

The translation word counting unit 19d refers to the translation word list created by the translation word list creating unit 19b and calculates, for each translation candidate word, the number of translation words (Step S407). For example, for the source language word 'girl' in the translation word list in Fig. 6, the count for the translation candidate word 'shoujo' is five and the translation candidate word 'onna-no-ko' is also five. Further, the translation word counting unit 19d presents the number as 'Actual No./Total No. (in other words, the probability), as shown in Fig. 7.

The translation candidate word counting unit 19e counts the number of translation candidate words for each word of the translation target sentence (Step S408). For example, for the source language word 'I' in the example shown in Fig. 7, the count is 0, for 'saw', the count is 1, and for 'girl' the count is two.

The display controller 20 creates a display screen for the process result of translation compiler 19 to be output on the output unit 12 (Step S409). The display controller 20 creates a screen showing the outcome of the process performed by the translation compiler 19 (Step S410), and directs the output unit 12 to display this screen. That is, the display controller 20 controls display in such a way that the words of the translation target word, like 'girl', along with the translation candidate words, like 'shoujo' and 'onna-no-ko' compiled and extracted by the translation compiler 19 are output on the output unit 12 (see Fig. 8B) .

The display controller 20 also controls, based on the result obtained by the translation word counting unit 19d, the display of the frequency of a particular translation candidate word (for instance the frequency of 'shoujo' and 'onna-no-ko' for the source language word 'girl') (See Fig. 8B), and, based on the result obtained by the translation candidate word counting unit 19e (that is, based on the number of translation candidate words for a given source language word), controls the display of the source language word by making it distinguishable by changing its display characteristics (for instance, font, color, etc.) (See Fig. 8B). Further, the display controller 20 also controls display in such a way that when a specific translation candidate word is selected (such as 'shoujo' or 'onna-no-ko') using the input unit 11, sample sentences (in both source language and target language) that include the selected word are displayed along with the title, field, translator, and date of translation on the output unit 12 (see Fig. 8C).

Next, it is assessed if any search conditions (such as the title, field, user, and date) are selected, based on which the translation sample searching unit 19a searches the translation sample database 15 (Step S411).

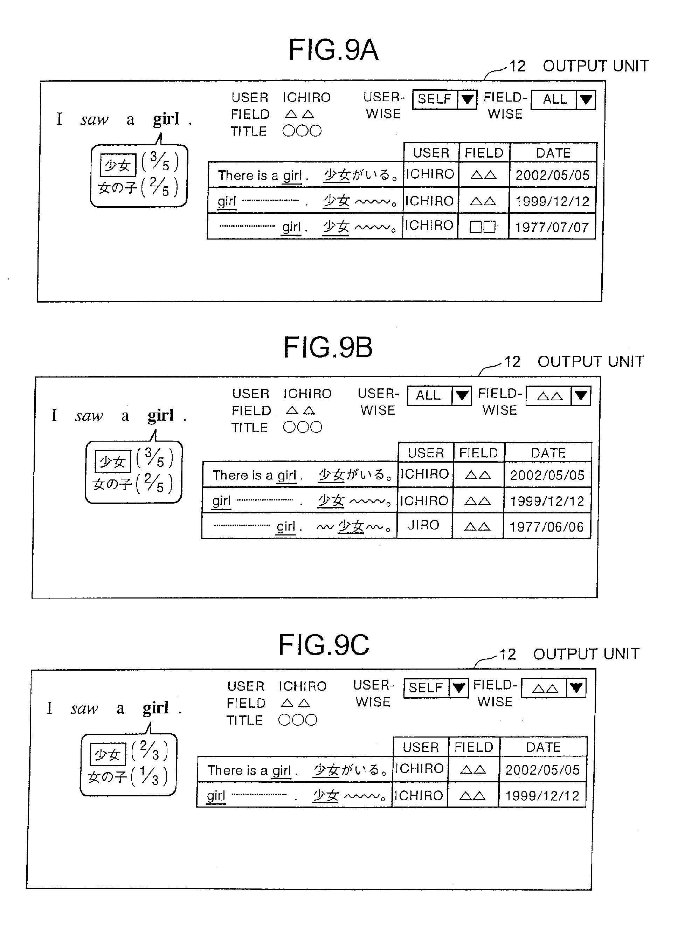

If there are any search conditions, that is if the result of assessment at Step 411 is Yes, the translation sample searching unit 19a searches for the source language sample sentences that satisfy the search conditions and their corresponding target language equivalents (Step S403), and based on the search result, executes Steps S404 to Step S410. Fig. 9A shows an instance where 'self' user is specified as the search condition. Fig. 9B shows an instance where 'ΔΔ' field is specified as the search condition. Fig. 9C shows an instance where the search is based on both 'self' user and 'ΔΔ' field as specified search conditions.

The next step is the translation candidate word selection step in which, using the input unit 11, a translation candidate word is selected for the source language word from the screen shown in Fig. 8C or Figs. 9A to 9C (Step S412). If a candidate is selected, that is, if the result of assessment at Step S413 is Yes, the translation word editing unit 21 correlates the source language word output on the output unit 12 with the translation candidate word selected using the input unit 11 and stores the two in a correlated form in the translation sample database 15 as sample words (Step S414). For instance, if 'shoujo' is selected as the translation candidate word for the source language word 'girl', these two words are stored in a correlated form in the translation sample database 15.

In the next step it is assessed if the processed sentence was the last one (Step S415). If the result of assessment at Step S415 is Yes, the process ends there. If the result of assessment at Step S415 is No, the process returns to Step S401 to perform all the above steps for the next sentence.

Hence, in the translation apparatus 10 according to the first embodiment of the present invention, the source language word and its translation candidate word are displayed side by side. Further, data that helps selection of appropriate translation candidate words (such as frequency of a particular source language word, sample sentences that use the translation candidate word (in both source language and target language), the title, field, translator, and date) are also output. Also, depending on the number of translation candidate words for a particular source language word, the source language text is displayed with display characteristics to make it easily distinguishable. All these features make the translation apparatus 10 according to the first embodiment an efficient translation tool.

A second embodiment according to the present invention is a computer system that can execute a computer program that realizes on the computer the functions of the translation apparatus 10 according to the first embodiment.

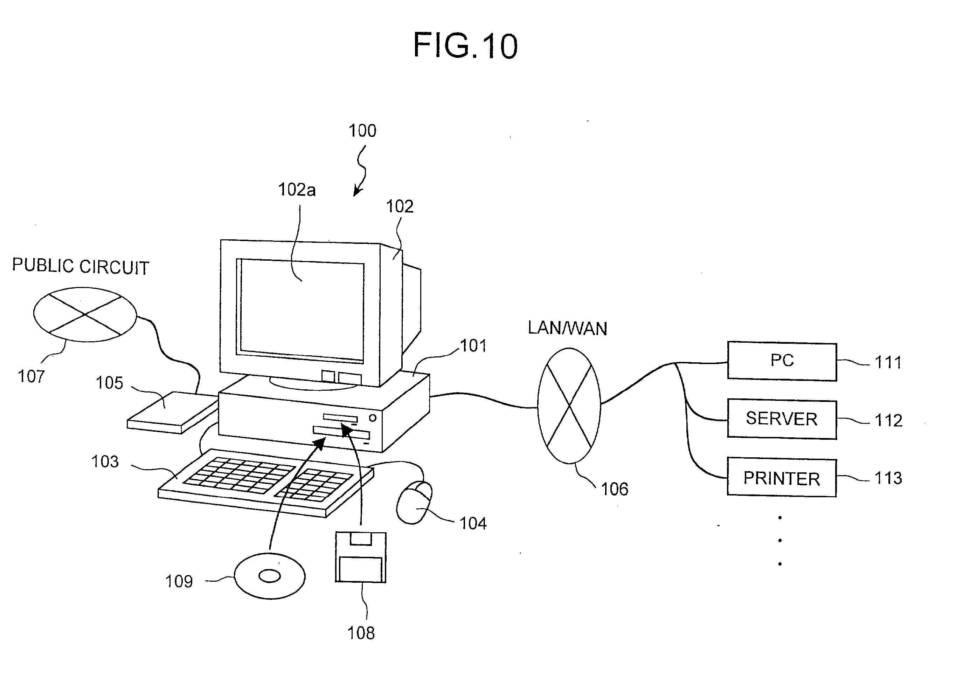

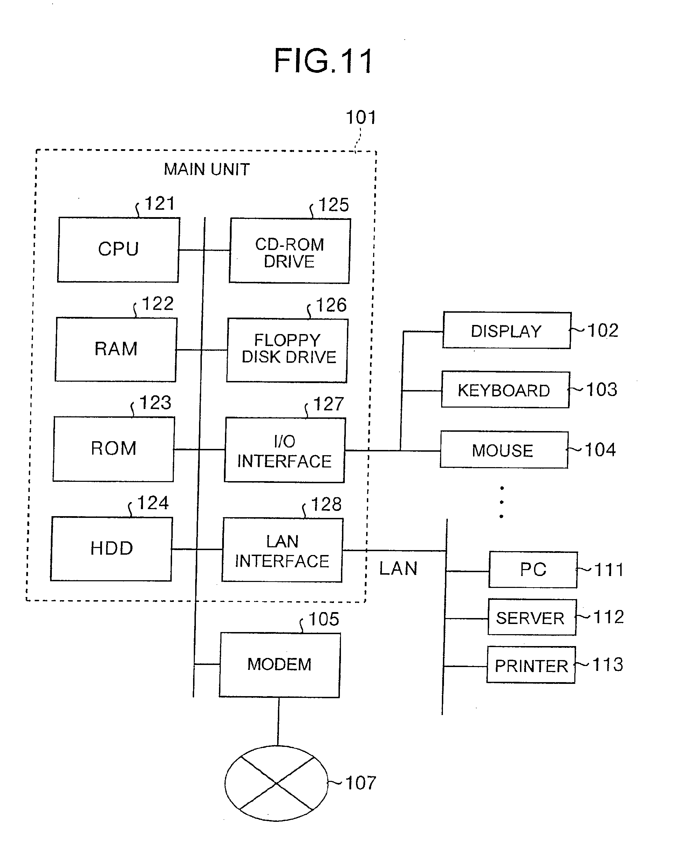

Fig. 10 is a schematic diagram of a computer system according to the second embodiment. Fig. 11 is a block diagram of a main unit of the computer system according to the second embodiment. The computer system 100 comprises a main unit 101, a display 102 on which, according to the instructions from the main unit 101, data such as images are displayed on a screen 102a, a keyboard 103 for entering various data into the computer system 100, and a mouse 104 for pointing at a position on the screen 102a of the display 102.

The main unit 101 of the computer system 100 comprises, as shown in Fig. 11, a central processing unit (CPU) 121, a random-access memory (RAM) 122, a read-only memory (ROM) 123, a hard-disk drive (HDD) 124, a compact-disk ROM (CD-ROM) drive 125 that accepts a CD-ROM 109, a floppy-disk (FD) drive 126 that accepts an FD 108, an input-output (I/O) interface 127 that connects the display 102, the keyboard 103, and the mouse 104 in parallel, and a local-area network (LAN) interface 128 for connecting to a local area network or a wide area network (LAN/WAN) 106.

Further, the computer system 100 is connected to a public network 107 such as the internet via a modem 105, and to another computer system (PC) 111, a server 112, and a printer 113, via the LAN interface 128 and the LAN/WAN 106.

The computer system 100 performs translation by reading the translation candidate word displaying program stored in a storage medium. The storage medium could be a portable physical medium such as the FD 108, the CD-ROM 109, a magneto-optical (MO) disk, a DVD disk, a laser disk or an IC card, or it can be a fixed physical medium such as the hard disk drive (HDD) 124, the RAM 122, or the ROM 123. The storage medium may be the one that is placed at a remote location and accessed via the public network 107 or the LAN/WAN 106.

In other words, the translation candidate word displaying program can be stored in a portable physical medium, a fixed physical medium or a communication medium from which the computer system 100 can read and execute it. Not just the computer system 100, but the other computer system 111, or the server 112 can also, either individually or collaboratively, read and execute the translation candidate word displaying program.

The present invention has variants of the embodiments described so far and yet that fall within the scope of the claims disclosed herein.

In the above descriptions, the source language is considered as English and the target language is considered as Japanese. However, the invention can be adapted for translation of any one language to any other language, for instance, from French to English or from Chinese to Japanese, and so on.

Further, all or some automatic processes described in the embodiments of the present invention can be made manual and vice versa. The user can also change the process steps and control steps described above or shown in the drawings, or data that include names, various data, parameters, etc., unless otherwise indicated.

The constituent elements of all the apparatuses shown in the accompanying drawings are functionally conceptual and need not necessarily be physically depictable. The structure of the apparatuses need not be limited to those shown in the accompanying drawings. An apparatus can be functionally or physically constructed using all or some of the constituent elements shown in the drawings, according to requirement. The processes of the apparatus thus fabricated may be, entirely or partially, carried out either by a CPU and a program in the CPU or by hardware, employing wired logic.

According to the present invention, the translation sample sentences are displayed along with the translation target text. Consequently, the user can do the translation efficiently by referring to how a particular word has been translated in prior work.

According to the present invention, disparate translation words can be displayed as they are as translation candidate words and multiple entries of the same translation word are collectively displayed as a single translation candidate word. Consequently, the user can, at a glance, find the translation without having to sift through multiple entries of the same translation word.

According to the present invention, a ratio of actual number of words present to the total number of words can be displayed along with a translation candidate word. Consequently, the user can judge at a glance, what translation candidate word has been chosen for a particular source language word and at what frequency, thereby making the translation process efficient.

According to the present invention, the translation candidate words can be displayed with distinguishable display characteristics depending on the frequency of their occurrence. Consequently, the user can judge, at a glance, how the original source word has been translated and how many times, and thereby carry out efficient translation, reducing usage of hardware resources.

According to the present invention, the translation candidate words can be presented in the form of sentences along with their corresponding source language sentences. Consequently, the user can understand the context in which a particular translation candidate word has been used and select the translation candidate word that is appropriate for the source language sentence.

According to the present invention, the field or the translator category under which a particular candidate word is stored can be found out by looking at the screen. Consequently, consistency and uniform quality of translation can be maintained even while translating from various languages.

According to the present invention, a more precise search can be carried out using the field, translator and/or date of translation as search conditions. Consequently a uniform quality of translation can be obtained even when translating from various languages.

According to the present invention, the plurality of words constituting a translation target sentence can be analyzed, translation words for each word can be compiled and translation candidate words extracted. Consequently, the user can at a glance get all the possible translation candidate words of a particular source language word. This helps in efficient translation.

According to the present invention, the user can pick the appropriate translation candidate word for a given source language word which can then be stored in a correlated form as sample text. Consequently, the next time the same word is encountered while translating, it can be translated easily and more efficiently.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A translation apparatus that translates a translation target sentence in a source language into a translation sentence in a target language, comprising:
a translation sample storing unit that stores in a correlated form each source word in sample sentences in the source language and a translation word that represents translation of the corresponding source word in the target language;
a translation compiling unit that compiles and extracts, from amongst the translation words stored, the translation words that correspond to each word in the translation target sentence as translation candidate words; and
a display controlling unit that displays the translation candidate words extracted by the translation compiling unit along with a specific word in the translation target sentence.

2. The translation apparatus according to claim 1, wherein the translation compiling unit comprises
a translation word list creating unit that refers to the translation word corresponding to each word stored in a correlated form in the translation sample storing unit and creates a translation word list corresponding to the specific word; and
a translation candidate word extracting unit that extracts, from the translation word list created by the translation word list creating unit, disparate translation words as they are as translation candidate words, and the translation words that appear more than once by collectively extracting them as a single translation candidate word, and wherein
the display controlling unit displays the translation candidate words extracted by the translation extracting unit along with the specific word.

3. The translation apparatus according to claim 2, wherein the translation compiling unit further comprises
a translation word counting unit that refers to the translation word list created by the translation word list creating unit and calculates, for each translation candidate word extracted by the translation candidate word extracting unit, the number of translation words corresponding to the translation candidate word, and wherein
the display controlling unit displays, for each translation candidate word, the number of translation words calculated by the translation word counting unit.

4. The translation apparatus according to claim 2, wherein the translation compiling unit further comprises a translation candidate word counting unit that calculates the number of translation candidate words extracted by the translation candidate word extracting unit, and
the display controlling unit displays the specific word in a distinguishable form depending on the number of translation candidate words calculated by the translation candidate word counting unit.

5. The translation apparatus according to any preceding claim, wherein the display controlling unit displays, for every translation candidate word, one or both of
the sample sentences in the target language that include the translation candidate word, and
the sample sentences in the source language that correspond to the sample sentences in the target language.

6. The translation apparatus according to any preceding claim, wherein the translation sample storing unit stores a specific sentence by correlating the sentence with any one or more fields to which the sentence belongs, a name of a translator who translated the sentence, and a date on which the sentence was translated; and
the display controlling unit displays, for each translation candidate word, the field, the name of the translator, and the date that are stored, by the translation sample storing unit, correlated to the sentence that includes the translation candidate word.

7. The translation apparatus according to any preceding claim, wherein the translation sample storing unit stores a specific sentence by correlating the sentence with any one or more fields to which the sentence belongs, the name of the translator who translated the sentence, and the date on which the sentence was translated, and
the translation apparatus further comprises a search condition receiving unit that receives any one or more of the fields, the name of the translator, and the date, stored correlated to the sentence by the translation sample storing unit, as a search condition by a user,
wherein the translation compiling unit compiles, from amongst the translation words stored in the translation sample storing unit, the translation words that satisfy the search condition received by the search condition receiving unit, and extracts the target candidate words.

8. The translation apparatus according to any preceding claim, further comprising a source language sentence analyzing unit that analyzes a plurality of words constituting the translation target sentence in the source language, wherein
the translation compiling unit compiles, for each word analyzed by the source language sentence analyzing unit, corresponding translation words, and extracts the translation candidate words; and
the display controlling unit displays, for each word analyzed by the source language sentence analyzing unit, the translation candidate words compiled and extracted by the translation compiling unit.

9. The translation apparatus according to any preceding claim, further comprising a translation word receiving unit that receives, through selection by the user from amongst the translation candidate words displayed by the display controlling unit, the translation candidate word to be implemented as the translation word for the specific word in the source language, wherein
the translation sample storing unit stores in a correlated form the specific word in the source language and the translation target word received by the translation word receiving unit as a new sample text.

10. A method of translating a translation target sentence in a source language into a translation sentence in a target language, comprising:
storing in a correlated form each source word in sample sentences in the source language and a translation word that represents translation of the corresponding source word in the target language;
compiling and extracting, from amongst the translation words stored, the translation words that correspond to each word in the translation target sentence as translation candidate words; and
displaying the translation candidate words extracted by the translation compiling unit along with a specific word in the translation target sentence.

11. The method according to claim 10, wherein the compiling comprises
referring to the translation word corresponding to each word stored in a correlated form in the translation sample storing unit and creating a translation word list corresponding to the specific word; and
extracting, from the translation word list created, disparate translation words as they are as translation candidate words, and the translation words that appear more than once by collectively extracting them as a single translation candidate word, and
wherein
the displaying includes displaying the translation candidate words extracted along with the specific word.

12. The method according to claim 11, wherein the compiling further comprises
referring to the translation word list, and calculating, for each translation candidate word extracted, the number of translation words corresponding to the translation candidate word, and
the displaying includes displaying, for each translation candidate word, the number of translation words calculated.

13. The method according to claim 11, wherein the compiling further comprises counting the number of translation candidate words extracted, and
the displaying includes displaying the specific word in a distinguishable form depending on the number of translation candidate words counted.

14. The method according to any of claims 10 to 13, wherein the displaying includes displaying, for every translation candidate word, one or both of
the sample sentences in the target language that include the translation candidate word, and
the sample sentences in the source language that correspond to the sample sentences in the target language.

15. The method according to any of claims 10 to 14, wherein the storing includes storing a specific sentence by correlating the sentence with any one or more fields to which the sentence belongs, a name of a translator who translated the sentence, and a date on which the sentence was translated; and
the displaying includes displaying, for each translation candidate word, the field, the name of the translator, and the date that are stored, correlated to the sentence that includes the translation candidate word.

16. The method according to any of claims 10 to 15,
wherein the storing includes storing the specific sentence by correlating the sentence with any one or more of the fields to which the sentence belongs, the name of the translator who translated the sentence, and the date on which the sentence was translated, and the method further comprises
receiving any one or more of the fields, the name of the translator, and the date, stored correlated to the sentence at the time of storing, as a search condition by a user,
wherein the compiling includes compiling, from amongst the translation words stored at the time of storing, the translation words that satisfy the search condition received, and extracting the target candidate words.

17. The method according to claim 10, further comprising analyzing a plurality of words constituting the translation target sentence in the source language, wherein
the compiling includes compiling, for each word analyzed, corresponding translation words, and extracting the translation candidate words; and
the displaying includes displaying, for each word analyzed, the translation candidate words compiled and extracted at the compiling.

18. The method according to any of claims 10 to 17, further comprising receiving, through selection by the user from amongst the translation candidate words displayed at the displaying, the translation candidate word to be implemented as the translation word for the specific word in the source language, wherein
the storing includes storing, in a correlated form, the specific word in the source language and the translation target word received.

19. A computer program containing instructions which when executed by a computer executes translation of a translation target sentence in a source language into a translation sentence in a target language, the computer program making the computer execute the steps of:
storing in a correlated form each source word in sample sentences in the source language and a translation word that represents translation of the corresponding source word in the target language;
compiling and extracting, from amongst the translation words stored, the translation words that correspond to each word in the translation target sentence as translation candidate words; and
displaying the translation candidate words extracted by the translation compiling unit along with a specific word in the translation target sentence.

20. The computer program according to claim 19, wherein the compiling step comprises
referring to the translation word corresponding to each word stored in a correlated form in the translation sample storing unit and creating a translation word list corresponding to the specific word; and
extracting, from the translation word list created, disparate translation words as they are as translation candidate words, and the translation words that appear more than once by collectively extracting them as a single translation candidate word, and
the displaying step includes displaying the translation candidate words extracted along with the specific word.

21. The computer program according to claim 20, wherein the compiling step further comprises
referring to the translation word list, and calculating, for each translation candidate word extracted, the number of translation words corresponding to the translation candidate word, and
the displaying step includes displaying, for each translation candidate word, the number of translation words calculated.

22. The computer program according to claim 20, wherein the compiling step further comprises counting the number of translation candidate words extracted, and
the displaying step includes displaying the specific word in a distinguishable form depending on the number of translation candidate words counted.

23. The computer program according to any of claims 19 to 22, wherein the displaying step includes displaying, for every translation candidate word, one or both of
the sample sentences in the target language that include the translation candidate word, and
the sample sentences in the source language that correspond to the sample sentences in the target language.

24. The computer program according to any of claims 19 to 23, wherein the storing step includes storing a specific sentence by correlating the sentence with any one or more fields to which the sentence belongs, a name of a translator who translated the sentence, and a date on which the sentence was translated; and
the displaying step includes displaying, for each translation candidate word, the field, the name of the translator, and the date that are stored, correlated to the sentence that includes the translation candidate word.

25. The computer program according to any of claims 19 to 24, wherein the storing step includes storing the specific sentence by correlating the sentence with any one or more fields to which the sentence belongs, the name of the translator who translated the sentence, and the date on which the sentence was translated, and the program makes the computer further execute the steps of:
receiving any one or more of the fields, the name of the translator, and the date, stored correlated to the sentence, as a search condition by a user,
wherein the compiling step includes compiling, from amongst the translation words stored, the translation words that satisfy the search condition received, and extracts the target candidate words.

26. The computer program according to any of claims 19 to 25, further comprising analyzing a plurality of words constituting the translation target sentence in the source language, wherein
the compiling includes compiling, for each word analyzed, corresponding translation words, and
extracting the translation candidate words; and
the displaying includes displaying, for each word analyzed, the translation candidate words compiled and extracted at the compiling.

27. The computer program according to any of claims 19 to 26, further comprising receiving, through selection by the user from amongst the translation candidate words displayed at the displaying, the translation candidate word to be implemented as the translation word for the specific word in the source language,
wherein
the storing step includes storing, in a correlated form, the specific word in the source language and the translation target word received.
